# EUROPÄISCHE PATENTSCHRIFT

(11) **EP 1 913 626 B1**
(45) Veröffentlichungstag und Bekanntmachung des Hinweises auf die Patenterteilung: **03.10.2012**
(21) Anmeldenummer: 06776771.5
(22) Anmeldetag: 11.08.2006
(51) Int. Cl.: H01J 61/34, H01J 61/36

(54) **HERSTELLVERFAHREN UND VERWENDUNG EINES DRAHTES UND GESTELLES FÜR EINSEITIG GESOCKELTE LAMPEN INSBESONDERE AUF BASIS VON NIOB**
METHOD FOR THE PRODUCTION AND USE OF A WIRE AND FRAME IN PARTICULAR NIOBIUM-BASED FOR SINGLE-SIDE SOCKET LAMPS
PROCEDE DE PRODUCTION ET UTILISATION D'UN FIL ET SUPPORT, NOTAMMENT A BASE DE NIOBIUM, POUR DES LAMPES A CULOT UNILATERAL

(30) Priorität: 12.08.2005 DE 102005038551
(43) Veröffentlichungstag der Anmeldung: 23.04.2008
(73) Patentinhaber: Heraeus Materials Technology GmbH & Co. KG, 63450 Hanau (DE)
(72) Erfinder: SPANIOL, Bernd, 63546 Hammersbach (DE)
(74) Vertreter: Kühn, Hans-Christian
(86) Internationale Anmeldenummer: PCT/EP2006/007952
(87) Internationale Veröffentlichungsnummer: WO 2007/020014

(56) Entgegenhaltungen:
- EP-A- 1 571 228
- EP-A1- 1 043 753
- US-A- 5 171 379

## Beschreibung

Die vorliegende Erfindung betrifft Gestelle für einseitig gesockelte Lampen insbesondere auf Niob-Basis, Drähte, die sich für Gestelle verwenden lassen, die Verwendung eines derartigen Gestelles als Halter und Stromzuführung für einen Brenner, sowie ein Verfahren zur Herstellung einer einseitig gesockelten Lampe mit einem Gestell.

Herkömmlicherweise bestehen Gestelle für einseitig gesockelte Lampen aus Niob und in einer verbesserten Ausführung gemäß ASTM B392 aus Niob-Zirkonium-Legierungen mit 1 % Zirkonium (NbZr1). Das Gestell hat einerseits die Funktion, den Brenner zu halten und andererseits, ihn mit Strom zu versorgen. Unerwünscht ist der Schatten, der durch den am Brenner vorbeigeführten Draht verursacht wird. Für kommerzielle Anwendungen gibt es je nach Brennerdimensionierung Drähte mit Durchmessern von 1,2 mm, 1 mm, 0,72 mm, 0,5 mm und 0,35 mm.

US 6,326,726 B1 beschreibt ein Drahtgestell aus federhartem Edelstahl, gegebenenfalls mit Nickel platiniert.

Sowohl EP 1043753 als auch US 3,882,346 beschreiben ein Metallgestell für einseitig gesockelte Lampen.

Es ist die Aufgabe der vorliegenden Erfindung, Material einzusparen, den Schatten zu reduzieren, sowie einen hochtemperaturbeständigen Draht bereitzustellen.

Zur Lösung der Aufgabe wird die Dehngrenze oder Zugfestigkeit des Gestells verbessert. Bei der Erhöhung dieser für Zimmertemperatur bestimmten Größen wird eine höhere Stabilität des Materials bei Temperaturen über 1000°C festgestellt. Der Schatten ließe sich zwar durch dünnere Gestelle aus einer wesentlich teureren Tantal-Wolfram-Legierung mit 2,5 bis 10 Gew.-% W verringern, nicht jedoch das Gewicht des Gestells.

Die Lösungen sind in den unabhängigen Ansprüchen beschirieben.

Die Erfindung betrifft ein Gestell für einseitig gesockelte Lampen mit einem verringerten Durchmesser und hierfür geeignete Drähte. Geeignete Drähte sind hochtemperaturbeständige Drähte auf Basis von Niob oder Tantal mit verbesserten mechanischen Eigenschaften bei Temperaturen über 1000°C, die dadurch erreicht werden, dass das Drahtmaterial mit Phosphor angereichert ist und insbesondere in einen geglühten Zustand übergeführt ist, bzw. sich durch eine Dehngrenze Rp 0,2 von mindestens 200 MPa oder einer Zugfestigkeit Rm von mindestens 300 MPa auszeichnet.

Erfindungsgemäß konnte die Dehngrenze und Zugfestigkeit von Niob, Tantal und Legierungen auf Basis von Niob oder Tantal durch Dotieren mit Phosphor wesentlich erhöht werden. Dies gilt insbesondere für Material in einem Zustand, in dem innere Spannungen durch Rekristallisation abgebaut sind, der durch Glühen geschaffen wird. Erfindungsgemäß werden für einen durch Glühen entspannten Draht oder ein daraus geformtes Gestell auf Niob- oder Tantalbasis Dehngrenzen Rp 0,2 von über 150 MPa, insbesondere über 200 MPa und vorzugsweise über 250 MPa bereit gestellt. Die erfindungsgemäß erzielbaren Zugfestigkeiten Rm betragen im entspannten (geglühten) Zustand über 250 MPa, insbesondere über 300 MPa, beispielsweise gemessen an einem 0,5 mm Durchmesser aufweisenden Gestell. Erfindungsgemäß kann aus dem Draht aus mit Phosphor dotiertem Niob gemäß der noch nicht veröffentlichten DE 10 2004 011 214 ein Gestell geformt werden. Dieser Draht oder das aus diesem Draht geformte Gestell muss noch entspannt werden, um erfindungsgemäße mechanische Eigenschaften zu erzielen. Zur Entspannung eignet sich Glühen. In diesem Zusammenhang bezeichnet der geglühte Zustand einen rekristallisierten Zustand nach Abbau innerer Spannungen des nicht mehr glühenden Drahtes. Neben der verbesserten Dehngrenze und Zugfestigkeit sind die mechanischen Eigenschaften des mit Phosphor dotierten Niobs weiterhin dahingehend verbessert, dass die Formgebung durch Aufwickeln des Drahtes auf einer Spule verringert ist.

Damit werden durch Phosphordotierung von Niob oder Metallen auf Basis von Niob selbst die sehr guten mechanischen Hochtemperatureigenschaften des teureren Tantals übertroffen. Tantal hat trotz geringerer Dehngrenze Rp 0,2 von 140 MPa und Zugfestigkeit bessere mechanische Hochtemperatureigenschaften. Auf Tantal basierende Metalle zeigen ab einer Dehngrenze von 150 MPa oder einer Zugfestigkeit von 200 darüber hinaus deutlich verbesserte mechanische Eigenschaften zwischen 1000 und 2000°C. Wird das teure Tantal teilweise durch Niob ersetzt, verändern sich die mechanischen Eigenschaften bis auf die maximale Temperaturresistenz nur unwesentlich bis zu einem Anteil von etwa 50% Niob. Ab einem Niob-Anteil von 70% wird der Unterschied zum Niob geringfügig.

Weitere Legierungsbestandteile, insbesondere Refraktärmetalle, können sich durchaus vorteilhaft auswirken. Zr, Hf, Ta, Mo und W eignen sich dazu, die mechanischen Eigenschaften des Niobs bei über 1000°C zu verbessern. Für Zr, Hf, Mo und W haben sich 0,5 bis 2 Gew.-% bewährt. Derartige Legierungen sind kalt umformbar und verlieren diese Eigenschaft mit zunehmendem Gehalt an Mo oder W.

Ta trägt als Legierungsbestandteil erst im Bereich von um eine Größenordnung höheren Gehalt zur deutlichen Verbesserung der mechanischen Eigenschaften bei, wobei die Legierungen aus Ta und Niob gegenüber den Einzelkomponenten stets verbesserte mechanische Eigenschaften aufweisen, insbesondere im Hochtemperaturbereich.

Auch die Niob-Tantal-Legierungen oder auch Tantal an sich können durch weitere Legierungsbestandteile, insbesondere Refraktärmetalle, durchaus vorteilhafte Wirkung zeigen. Zr, Hf, Mo und W eignen sich dazu, die mechanischen Eigenschaften der Niob-Tantal-Legierungen oder des Tantals an sich bei über 1000°C zu verbessern. Für Zr, Hf, Mo und W haben sich 0,5 bis 2 Gew.-% bewährt. Derartige Legierungen sind kalt umformbar und verlieren diese Eigenschaft mit zunehmendem Gehalt an Mo oder W.

Die Auswirkungen dieser Metalle auf die Dehngrenze und Zugfestigkeit liegen bei einem Legierungsanteil bis 1 Gew.-% im Bereich von 30 Mpa. Eine zusätzliche Dotierung von 100 bis 500 ppm Phosphor ermöglicht eine Erhöhung der Dehngrenze und Zugfestigkeit von über 100 Mpa.

Die Dehngrenze wird und die Zugfestigkeit sind in DIN EN 10002-1 "Zugversuch bei Raumtemperatur" definiert.

Maßgeblich für bei Zimmertemperatur gezogene Drähte (kalte Umformung) ist außerdem ein abschließendes Glühen zur Rekristallisation der Drähte.

Drähte auf Basis von Niob oder Tantal mit einer Dehngrenze zwischen 200 und 500 MPa oder einer Zugfestigkeit zwischen 300 und 600 MPa weisen derart verbesserte mechanische Hochtemperatureigenschaften auf, dass Gestelle ohne Stabilitätsverlust mit 65-75 % und weniger der herkömmlichen Durchmesser bei gleichzeitig 25 bis 50 Gew.-% und mehr Materialersparnis ermöglicht werden. Der Schatten reduziert sich zumindest im gleichen Umfang wie der Durchmesser des Drahtes. Hinsichtlich der sonstigen Eigenschaften sind die erfindungsgemäßen Gestelle zumindest gleichwertig hinsichtlich der bekannten Gestelle. Im Fall von Tantal basierten Metallen reichen bereits Dehngrenzen von 150 MPa oder Zugfestigkeiten von 250 MPa für gute mechanische Eigenschaften über 1000°C.

Die Grenze der Dotierung mit P ist durch eine mit steigendem P-Gehalt einhergehend Verminderung der Kaltverformbarkeit gegeben.

Bei P-Gehalten in der Größenordnung von Prozenten ist weder eine Kaltumformung noch eine Warmumformung möglich.

Die Gestelle werden aus diesen Drähten geformt, die einerseits auf Niob oder Tantal basieren und andererseits eine Dehngrenze von mindestens 200 MPa oder eine Zugfestigkeit von mindestens 300 MPa aufweisen. Im Fall von Tantal basierten Metallen reichen bereits Dehngrenzen von 150 MPa oder Zugfestigkeiten von 250 MPa.

Vorzugsweise enthalten diese Drähte auf Basis von Niob oder Tantal:
- Phosphor, insbesondere 100 bis 2000 ppm oder
- wenigstens ein weiteres Refraktärmetall, insbesondere der Nebengruppen 4 bis 6, wobei der Gehalt von Zr, Hf, Mo oder W vorzugsweise 0,5 bis 2 Gew.-% beträgt und ganz besonders bevorzugt 0,8 bis 1,5 Gew.-% oder
- mindestens 95 Gew.-% Nb oder Ta oder Nb und Ta

Für die Formgebung der Gestelle aus den Drähten bietet sich Biegen und Schweißen an.

Die bewährte Form des Gestells ist galgenförmig.

Analog lassen sich mit Phosphordotierung die mechanischen Eigenschaften von Tantal und Tantal-Niob-Legierungen verbessern.

Erfindungsgemäß wurde herausgefunden, dass die mechanischen Eigenschaften der Gestelldrähte bei über 1000°C eines Gestelldrahtes ausreichen, einen Brenner über die Lebensdauer einer Lampe in seiner Lage stabil zu halten, sofern mit den erfindungsgemäßen Metalllegierungen die bei Zimmertemperatur gemessene Zugfestigkeit oder Dehngrenze erreicht wird. Erfindungsgemäß kommt es somit nicht auf die Eigenschaften bei Raumtemperatur an sich an, sondern auf die Eigenschaften dieser Materialien bei über 1000°C. Maßgeblich ist, dass das Basismaterial aus Niob oder Tantal oder einer Legierung davon besteht, die bevorzugt mit untergeordneten Mengen an Zirkonium, Hafnium, Molybdän oder Wolfram legiert ist. Bevorzugt beträgt das Basismaterial weit über 90 Gew.-%.

Das erfindungsgemäße Gestellmaterial ist vorzugsweise kalt umformbar. Diese Anforderung begrenzt das Zulegieren von Molybdän, Wolfram und Rhenium. Legierungen aus Niob und Tantal weisen eine gegenüber den Reinmetallen verbesserte Stabilität auf. Dieser Effekt ist jedoch erst ab einem Tantalgehalt von über 10 Gew.-% Tantal von praktischer Bedeutung.

Erfindungsgemäße Dotierungen des Basismetalls mit 100 bis 2000 ppm Phosphor erfolgen durch:
- Elektronenstrahlschmelzen durch Zugabe von P oder P-haltigen Vorlegierungen oder
- Lichtbogenschmelzen durch Zugabe von P oder P-haltigen Vorlegierungen oder
- der Sinterblockherstellung aus Nb-Pulver durch Zugabe von P oder P-haltigen Vorlegierungen oder
- der Sinterblockherstellung aus mit bereits P dotiertem Nb-Pulver.

Im folgenden wird die Erfindung anhand von Beispielen und mit Bezug auf die Abbildung verdeutlicht.

Figur 1 ist ein Querschnitt durch eine einseitig gesockelte Entladungslampe.

9400 g Nb und 600g P werden unter Schutzgas in einem Lichtbogenofen unter Schutzgas zu einer Vorlegierung geschmolzen. Die Vorlegierung ist sehr hart und so spröde, dass sie nicht einmal bei 1600°C verformbar ist.

Ein Niob-Schmelzblock wird unter homogener Zugabe einer 6% Phosphor enthaltenden Vorlegierung durch Elektronenstrahlschmelzen mit P dotiert, so dass sich eine Niob-Legierung mit 100 bis 2000 µg/g Phosphor ergibt. Eine so erzeugte Niob-Legierung mit 350 ± 50 ppm Phosphor wird bei Raumtemperatur zu Drähten mit einem Durchmesser von 0,84 mm, 0,72 mm, 0,5, 0,35 mm, 0,24 mm und 0,13 mm gezogen.

Der erfindungsgemäße 0,84 mm-Draht ersetzt den handelsüblichen1,2 mm-Draht;

Der erfindungsgemäße 0,72 mm-Draht ersetzt den handelsüblichen 1 mm-Draht;

Der erfindungsgemäße 0,5 mm-Draht ersetzt den handelsüblichen 0,72 mm-Draht;

Der erfindungsgemäße 0,35 mm-Draht ersetzt den handelsüblichen 0,5 mm-Draht,

Der erfindungsgemäße 0,24 mm-Draht ersetzt den handelsüblichen 0,35 mm-Draht;

Der erfindungsgemäße 0,13 mm-Draht wird für besonders leichte Brenner bereitgestellt.

Hinsichtlich der Form bleibt das Gestell gegenüber den Standardgestellen bis auf den Drahtdurchmesser unverändert. Das eingesetzte Material wurde demnach auf 60 % reduziert. Der Schatten wurde um 22 % reduziert.

Die jeweiligen Drähte werden geglüht, hierbei erfolgt ein Entropieabbau, so dass die Drähte beim Glühen rekristallisiert werden. Die rekristallisierten Drähte haben die erfindungsgemäß gewünschten Eigenschaften. Sie lassen sich zu galgenförmigen Gestellen formen. Hierzu werden sie gebogen oder geschweißt. Die galgenförmigen Gestelle werden mit der Mo-Folie 7 und dem Anschlussstift 2 verschweißt.

### Tabelle Versuchsergebnisse

| | Dehngrenze [MPa] | Zugfestigkeit [MPa] | Dehnung A_{L} 254 |
|---|---|---|---|
| Nb | 170 | 280 | 20 |
| NbZr1 | 130 | 280 | 28 |
| Nb mit 350 ± 50 ppm P | 270 | 375 | 25 |

Am Beispiel einer Dotierung mit 350 µg/g P wird eine Dehngrenze von 270 MPa im geglühten Zustand erzielt. Dabei werden die mechanischen Eigenschaften bei Temperaturen über 1000° C so verbessert, dass das Gestell mit 75% des Durchmessers gegenüber dem konventionellen NbZr1 % Gestell auskommt.

Bei höheren P-Dotierungen bis 2000 µg/g können noch weitere Steigerungen der Dehngrenze erzielt werden. Bei einer Dehngrenze von 500 MPa ist eine Durchmesser-Reduzierung auf unter 65 % realisierbar. Dies hat Materialeinsparungen von über 50 Gew.-% zur Folge.

Gemäß eines Ausführungsbeispieles wird innerhalb eines Glaskolbens ein Keramikbrenner auf einer Seite von einem Gestell gehalten. Die im Glasraum herrschenden Betriebsbedingungen sind durch die hohe Temperatur des Brenners, das emittierte Licht und den Ausschluss äußerer Atmosphärenbedingungen charakterisiert. Der Brenner selbst wird über Anschlußstifte elektrisch und mechanisch verbunden. Die Anschlussstifte bestehen aus dem gleichen Material wie das Gestell oder verbleiben alternativ unverändert. Eine Glasdurchführung aus Molybdänfolie und äußere Anschlussstifte aus Molybdän werden im Zusammenhang mit einer gasdichten Quetschverbindung angewendet. Das Gestell und der eine Anschlussstift dienen einerseits zur elektrischen Stromversorgung des Brenners und andererseits dazu, den Brenner in der Lampe mechanisch zu befestigen, bzw. zu halten. Erfindungsgemäß wird hierzu ein besonders dünnes Gestell bereitgestellt, das den elektrischen und mechanischen Anforderungen genügt und somit zu einer Materialersparnis führt, die wiederum mit der Reduzierung des Schattens einhergeht.

## Patentansprüche

1. Verfahren zur Herstellung eines Gestells für einseitig gesockelte Lampen, **dadurch gekennzeichnet, dass** ein Metall auf Basis von Niob oder Tantal oder einer Legierung davon mit Phosphor dotiert wird und das dotierte Metall kalt zu einem Draht umgeformt wird, der als Draht geglüht wird und zu einem Gestell geformt wird.

2. Verwendung eines Gestells aus einem mit Phosphor dotiertem Metall auf Basis von Niob oder Tantal oder Niob-Tantal-Legierung zur gleichzeitigen Stromzuführung und Halterung für einen Brenner in einer einseitig gesockelten Lampe.

## Claims

1. A process for the manufacture of a support for lamps with a socket on one side **characterized in that** a metal based on niobium or tantalum or an alloy thereof is enriched with phosphorous and the enriched metal is cold formed into a wire which is heat-treated as a wire and formed into a support.

2. The use of a support made from a metal based on Niobium or tantalum or a niobium-tantalum alloy enriched with phosphorous for simultaneously supplying power and providing a mounting for a burner in a lamp with a socket on one side.

## Revendications

1. Procédé de fabrication d'un support pour lampes culottées d'un côté, **caractérisé en ce qu'**un métal à base de niobium ou de tantale ou d'un alliage de ceux-ci est dopé avec du phosphore et le métal dopé est transformé à froid en un fil qui est recuit en tant que fil et moulé en un support.

2. Utilisation d'un support constitué d'un métal dopé avec du phosphore à base de niobium ou de tantale ou d'un alliage de niobium et de tantale pour l'amenée de courant et la fixation simultanées pour un brûleur dans une lampe culottée d'un côté.
